# EUROPEAN PATENT APPLICATION

(11) **EP 1 852 779 A2**
(43) Date of publication of application: **07.11.2007**
(21) Application number: 06255226.0
(22) Date of filing: 11.10.2006
(51) Int. Cl.: G06F 9/445

(54) **Television and display device with a usb port for updating firmware**

(30) Priority: 04.05.2006 US 429132
(71) Applicant: Syntax Brillian Corp., Tempe AZ 85281 (US)
(72) Inventor: Miller, Samuel, Chino Hills, California 91709 (US)
(74) Representative: Kenrick, Mark Lloyd

(57) **Abstract**

A method and apparatus for conveniently updating firmware within a television device or a desktop computer monitor using a USB port is described. The TV or monitor is provided with a USB port. In a first configuration, the TV or monitor acts as a USB host, and updated firmware is transferred to the TV or monitor from a USB memory device inserted into the USB port of the TV or monitor. In a second configuration, the TV or monitor is connected to a PC via a USB cable and acts as a USB client. The updated firmware is transferred to the TV or monitor from the PC which acts as a USB host.

## Description

### BACKGROUND OF THE INVENTION

### Field of the Invention

This invention relates to display devices such as television sets or desktop computer monitors, and in particular, it relates to method and apparatus for updating firmware in the display device.

### Description of the Related Art

A television device includes one or more microprocessors and firmware stored in a non-volatile memory within the TV that control many functions of the TV. Conventionally, when the firmware needs to be updated, the new firmware is loaded into the memory via an RS232C port using a custom driver. The cable used for this task is typically a mini DIN to DB9 cable. A typical user likely does not have the cable or the driver, so firmware update has to be done by a service person or at a service shop. Also, the entire firmware is typically replaced. Computer monitors are similarly controlled by microprocessors and firmware, and similar issues are present for updating firmware in a monitor.

Universal serial bus (USB) ports are widely used for communication between computers and peripheral devices such as keyboards and mice, printers, scanners, external memories, external DVD drives/burners, digital cameras, etc. USB memories (USB flash drive) are also widely used for convenient storage and transfer of data.

### SUMMARY OF THE INVENTION

The present invention is directed to a method and apparatus for updating firmware stored in a television device or a computer monitor using a universal serial bus (USB) port.

An object of the present invention is to provide a method and apparatus for more conveniently updating firmware within a television devices or a monitor.

Additional features and advantages of the invention will be set forth in the descriptions that follow and in part will be apparent from the description, or may be learned by practice of the invention. The objectives and other advantages of the invention will be realized and attained by the structure particularly pointed out in the written description and claims thereof as well as the appended drawings.

To achieve these and other advantages and in accordance with the purpose of the present invention, as embodied and broadly described, the present invention provides a television device or a desktop computer monitor having a control section, the control section including a processor, a non-volatile memory storing program instructions used by the processor, a universal serial bus (USB) port, and a communication channel that connects the processor, the non-volatile memory and the USB port to each other. The USB port can either be a receptacle used in a USB host or a receptacle used in a USB client.

In another aspect, the present invention provides a method for updating firmware in a television device or a desktop computer monitor, where the television device or the desktop computer monitor comprises a control section having a processor, a non-volatile memory for storing the firmware, a universal serial bus (USB) port, and a communication channel that connects the processor, the non-volatile memory and the USB port to each other, the method including: storing firmware programs in a USB memory device, inserting the USB memory device into the USB port, and under control of the control section of the television or the desktop computer monitor, transferring firmware programs stored in the USB memory device to the non-volatile memory of the television or the desktop computer monitor.

In another aspect, the present invention also provides a method for updating firmware in a television device or a desktop computer monitor, where the television device or the desktop computer monitor comprises a control section having a processor, a non-volatile memory for storing the firmware, a universal serial bus (USB) port, and a communication channel that connects the processor, the non-volatile memory and the USB port to each other, the method including: storing firmware programs in a computer having a USB port and running a driver application, connecting the computer to the television with a USB cable, and under control of the driver application of the computer, transferring firmware programs stored in the computer to the non-volatile memory of the television or the desktop computer monitor.

It is to be understood that both the foregoing general description and the following detailed description are exemplary and explanatory and are intended to provide further explanation of the invention as claimed.

### BRIEF DESCRIPTION OF THE DRAWINGS

Figure 1 schematically illustrates a television device or a desktop computer monitor having a USB port in a configuration in which the television acts as a USB host according to one embodiment of the present invention.
Figure 2 schematically illustrates a television device or a desktop computer monitor having a USB port in a configuration in which the television acts as a USB client according to another embodiment of the present invention.
Figure 3 is a flowchart showing a process of updating firmware in a television device or a desktop computer monitor in a configuration where the TV acts as a USB host.
Figure 4 is a flowchart showing a process of updating firmware in a television device or a desktop computer monitor in a configuration where the TV acts as a USB client.

### DETAILED DESCRIPTION OF THE PREFERRED EMBODIMENTS

The following descriptions use a television device as an example, but the invention is also applicable to desktop computer monitors or other types of stand-alone display devices.

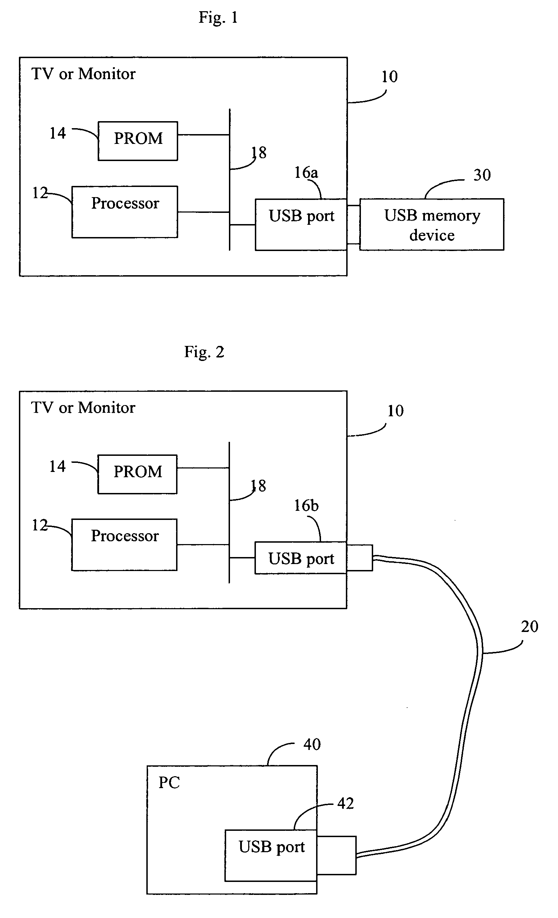

Fig. 1 schematically illustrates a television device having a USB port in a configuration for firmware update in which the television acts as a USB host (also referred to as a USB master) according to one embodiment of the present invention. Fig. 1 shows a control section of the television device 10; other components of the TV (such as a tuner, a display screen, etc.) are well known in the art and are not shown here. The control section includes a processor 12, a PROM (or other suitable non-volatile memory) 14 for storing program instructions (firmware) and other data used by the processor, a USB port 16a, and an internal bus 18 or other suitable communication channel that connects the above components to each other. The USB port 16a is of the type used in a device that acts as a USB host, sometimes referred to as the "A" receptacle. A USB memory device 30 may be inserted into the USB port 16a, and program files stored in the USB memory 30 can be transferred to the PROM 14. The USB memory device 30 acts as a USB client (also referred to as a USB slave). Transfer may be initiated by the processor 12 in response to commands issued by a user.

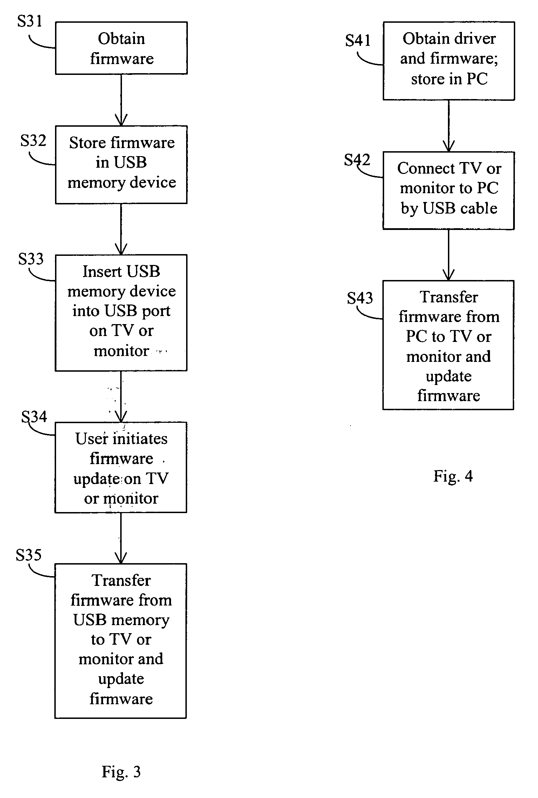

Fig. 3 is a flowchart showing a process of updating firmware in the TV 10 in a configuration where the TV acts as a USB host. The user may interact with the TV 10 using an on-screen display (OSD) method by which the TV, under control of the processor, displays messages on the screen and the user enters commands into the TV using a remote control device or buttons on the TV. Alternatively, dedicated buttons on the remote control or the TV may be used for interacting with the TV. As shown in Fig. 3, the user first obtains the update firmware from a suitable source, e.g. by downloading it from a website onto the user's computer (PC) (step S31). (Note that the files to be loaded into the TV are referred to as firmware here because they are intended to be stored in a PROM on the TV; they may also be referred to as software, or simply programs, which include both program files and other associated data files.) The firmware is stored in a USB memory device 30 (step S32). The user then inserts the USB memory device into the USB port 16a of the TV (step S33), and initiates the firmware update process on the TV by using, for example, a remote control or buttons as described above (step S34). The firmware on the USB memory is transferred to the TV 10 and stored in the PROM 14 (step 35) under the control of the TV which acts as a USB host. Step 35 includes the appropriate internal processes of entering into a firmware update mode and carrying out the firmware update. These processes may occur with or without further intervention by the user, depending on implementation.

Fig. 2 schematically illustrates a television device having a USB port in a configuration for firmware update in which the television acts as a USB client according to another embodiment of the present invention. The TV 10 is similar to that shown in Fig. 1, but the USB port 16b is of the type used in a device that acts as a USB client, sometimes referred to as the "B" receptacle. During firmware update, the TV 10 is connected by a USB cable 20 to a PC 40, which has a USB port 42 (an "A" receptacle). Program files stored in the PC 40 are transferred to the TV 10 via the USB cable 20 under the control of the PC 40, which acts as a USB host. Typically, a driver program is required on the PC 40 to control the transfer. Such a driver may be installed on the PC by the user, or may be a part of the operating system. The driver typically only needs to be installed once and can be used for subsequent firmware updates.

Fig. 4 is a flowchart showing a process of updating firmware in the TV 10 in a configuration where the TV acts as a USB client. As shown in Fig. 4, the user first obtains the update firmware, as well as the driver program if needed, from a suitable source, e.g. by downloading them from a website onto the PC 40 (step S41). Step 41 also includes installing the driver program on the PC 40 if it is not already installed. The user then connects the TV to the PC using a USB cable 20 (step S42). Upon a proper command issued by the user, the PC transfers the firmware from its memory to the TV (the PROM 14) under control of the driver program (step S43). Step 43 includes the appropriate internal processes of brining the TV into a firmware update mode and carrying out the firmware update. These processes may occur with or without further intervention by the user, depending on implementation.

USB is a well established communication protocol and the specific implementations of the embodiments of the present invention are within the ability of those skilled in the relevant art.

The structure and methods described above for a television device can be applied to a desktop computer monitor. While a desktop computer monitor is not typically used with a remote control device, buttons are provided on the monitor for the user to interact with the monitor.

It will be apparent to those skilled in the art that various modification and variations can be made in the method and apparatus of the present invention without departing from the spirit or scope of the invention. Thus, it is intended that the present invention cover modifications and variations that come within the scope of the appended claims and their equivalents.

## Claims

1. A television device having a control section, the control section comprising:
a processor;
a non-volatile memory storing program instructions used by the processor;
a universal serial bus (USB) port; and
a communication channel that connects the processor, the non-volatile memory and the USB port to each other.

2. The television device of claim 1, wherein the USB port is a receptacle used in a USB host.

3. The television device of claim 2, wherein the processor is operable to control the USB port to act as a USB host to transfer data from an external USB device inserted into the USB port to the non-volatile memory.

4. The television device of claim 1, wherein the USB port is a receptacle used in a USB client.

5. A method for updating firmware in a television device, the television device comprises a control section having a processor, a non-volatile memory for storing the firmware, a universal serial bus (USB) port, and a communication channel that connects the processor, the non-volatile memory and the USB port to each other, the method comprising:
storing firmware programs in a USB memory device;
inserting the USB memory device into the USB port; and
under control of the control section of the television, transferring firmware programs stored in the USB memory device to the non-volatile memory of the television.

6. The method of claim 5, wherein the control section is operable to interface with a user using on-screen display and a remote control device or buttons on the television device, the method further including:
a user initiating firmware update by issuing a command to the television using the remote control device or buttons on the television device.

7. A method for updating firmware in a television device, the television device comprises a control section having a processor, a non-volatile memory for storing the firmware, a universal serial bus (USB) port, and a communication channel that connects the processor, the non-volatile memory and the USB port to each other, the method comprising:
storing firmware programs in a computer having a USB port and running a driver application;
connecting the computer to the television with a USB cable; and
under control of the driver application of the computer, transferring firmware programs stored in the computer to the non-volatile memory of the television.

8. A desktop computer monitor having a control section, the control section comprising:
a processor;
a non-volatile memory storing program instructions used by the processor;
a universal serial bus (USB) port; and
a communication channel that connects the processor, the non-volatile memory and the USB port to each other.

9. The desktop computer monitor of claim 8, wherein the USB port is a receptacle used in a USB host.

10. The desktop computer monitor of claim 9, wherein the processor is operable to control the USB port to act as a USB host to transfer data from an external USB device inserted into the USB port to the non-volatile memory.

11. The desktop computer monitor of claim 8, wherein the USB port is a receptacle used in a USB client.

12. A method for updating firmware in a desktop computer monitor, the desktop computer monitor comprises a control section having a processor, a non-volatile memory for storing the firmware, a universal serial bus (USB) port, and a communication channel that connects the processor, the non-volatile memory and the USB port to each other, the method comprising:
storing firmware programs in a USB memory device;
inserting the USB memory device into the USB port; and
under control of the control section of the desktop computer monitor, transferring firmware programs stored in the USB memory device to the non-volatile memory of the desktop computer monitor.

13. The method of claim 12, wherein the control section is operable to interface with a user using on-screen display and a plurality of control buttons, the method further including:
a user initiating firmware update by issuing a command to the desktop computer monitor using the control buttons and on-screen display.

14. A method for updating firmware in a desktop computer monitor, the desktop computer monitor comprises a control section having a processor, a non-volatile memory for storing the firmware, a universal serial bus (USB) port, and a communication channel that connects the processor, the non-volatile memory and the USB port to each other, the method comprising:
storing firmware programs in a computer having a USB port and running a driver application;
connecting the computer to the desktop computer monitor with a USB cable; and
under control of the driver application of the computer, transferring firmware programs stored in the computer to the non-volatile memory of the desktop computer monitor.
